# EUROPÄISCHE PATENTANMELDUNG

(11) **EP 1 431 898 A2**
(43) Veröffentlichungstag der Anmeldung: **23.06.2004**
(21) Anmeldenummer: 03024907.2
(22) Anmeldetag: 28.10.2003
(51) Int. Cl.: G06F 17/60

(54) **Automatisierungssystem und Verfahren zum Betrieb eines Automatisierungssystems**

(30) Priorität: 18.12.2002 DE 10259342
(71) Anmelder: SIEMENS AKTIENGESELLSCHAFT, 80333 München (DE)
(72) Erfinder: Becker, Norbert, 91058 Erlangen (DE); Deppe, Manfred, 90530 Wendelstein (DE)

(57) **Zusammenfassung**

Für eine automatische Aktualisierung von Automatisierungskomponenten eines Automatisierungssystems wird erfindungsgemäß bei einem Verfahren zum Betrieb eines Automatisierungssystems (1) für eine technische Anlage mit einer Anzahl von über eine Datenübertragungseinheit (4) miteinander verbundenen Datenverarbeitungseinheiten (2, 2a bis 2z) ein der jeweiligen Datenverarbeitungseinheit (2, 2a bis 2z) zugrundeliegender Satz (S) von Daten und/oder Programmen in einer zentralen Datenverarbeitungseinheit (6) redundant mittels eines redundanten Satzes (SR) von Daten und/oder Programmen hinterlegt, wobei bei einem Ausfall und/oder einer Änderung einer der Datenverarbeitungseinheiten (2, 2a bis 2z) diese anhand des redundanten Satzes (SR) von Daten und/oder Programmen automatisch aktualisiert bzw. geändert wird, indem der betreffende redundante Satz (SR) von Daten und/oder Programmen automatisch von der zentralen Datenverarbeitungseinheit (6) zur betreffenden Datenverarbeitungseinheit (2, 2a bis 2z) übertragen wird oder umgekehrt.

## Beschreibung

Die Erfindung betrifft ein Automatisierungssystem und ein Verfahren zum Betrieb eines Automatisierungssystems mit einer Anzahl von über eine Datenübertragungseinheit miteinander verbundenen Datenverarbeitungseinheiten für eine technische Anlage, z. B. eine Kraftwerksanlage oder eine Chemieanlage.

Üblicherweise wird eine technische Anlage, wie z. B. eine Kraftwerksanlage, mittels einer Vielzahl von einzelnen oder zusammenwirkenden Steuer- und Regelfunktionen eines Automatisierungssystems oder einer speicherprogrammierbaren Steuerung automatisch gesteuert und überwacht. Dazu umfasst das Automatisierungssystem eine Anzahl von Datenverarbeitungseinheiten oder Automatisierungsgeräten. Um der hohen Komplexität großtechnischer Anlagen gerecht zu werden, kann das Automatisierungssystem zusätzlich eine Mehrzahl von dezentral angeordneten Teilsystemen umfassen. Die dezentralen Teilsysteme dienen üblicherweise der Steuerung und Überwachung von so genannten Feldgeräten, wie z. B. von Sensoren, Armaturen oder Motoren, die weit entfernt und somit dezentral in der Kraftwerksanlage angeordnet sind.

Die Automatisierungsgeräte und die Teilsysteme - auch Datenverarbeitungseinheiten genannt - kommunizieren üblicherweise über eine gemeinsame Datenübertragungseinheit, z. B. über einen Datenbus, miteinander. Die Komplexität der Kraftwerksanlage sowie ständig steigende Sicherheitsanforderungen führen dabei zu einer Vielzahl von unterschiedlichen Systemen und Geräten, welche eine eigene Datenhaltung und spezifische Engineering- oder Projektierungs-Werkzeuge bzw. -Programme erfordern. Im Service- und gerade im Fehler-Fall ist es daher notwendig neben der Vielzahl von unterschiedlichen Hardware-Komponenten auch die zugehörige Software und die zugehörigen Software-Werkzeuge vorzuhalten. Dies ist zum einen besonders kostenintensiv und aufwendig. Zum anderen ist es beispielsweise bei einem Austausch von komplexen Geräten erforderlich, dass die vorhandene Software und die vorhandenen Software-Geräte über aktuelle Versionen oder so genannte Updates verfügen und das Personal im Umgang mit der Vielzahl der Programme und Werkzeuge geübt ist. Daher kommt es gerade im Falle einer derartigen offline vorhandenen Ablage von Software und Software-Werkzeugen zu veralteten Versionen, welche bei Austausch einer neuen Generation von Geräten manuell bearbeitet und auf den aktuellen Stand zu bringen ist. Dies ist nicht nur besonders zeitaufwendig, sondern kann gerade im Falle von großtechnischen Anlagen im schlechtesten Fall auch zu einem Ausfall einer Teil- oder gar der Gesamtanlage führen.

Alternativ ist es bekannt, dass eine auszutauschende Komponente, z. B. ein zieh- und steckbares Programm- und/oder Speichermodul des Automatisierungsgerätes, mit einer zugehörigen Speichereinheit versehen ist, die entfernt und in das neue Programm- und/oder Speichermodul wieder eingesteckt werden kann. Eine derartige modulbezogene Vorhaltung der Software und Daten auf einer separaten Speichereinheit für jede Komponente in der großtechnischen Anlage ist insbesondere bei komplexen Geräten oder Modulen nicht einsetzbar. Darüber hinaus bedingt dies eine aufwendige und kostenintensive Hardwarestruktur der auszutauschenden Komponente.

Der Erfindung liegt daher die Aufgabe zugrunde, ein Verfahren zum Betrieb eines Automatisierungssystems für eine technische Anlage anzugeben, bei dem eine Automatisierungskomponente besonders einfach und sicher ausgetauscht und/oder geändert werden kann. Des Weiteren soll ein besonders geeignetes Automatisierungssystem für eine technische Anlage angegeben werden.

Die erstgenannte Aufgabe wird erfindungsgemäß gelöst, indem bei einem Verfahren zum Betrieb eines Automatisierungssystems für eine technische Anlage mit einer Anzahl von über eine Datenübertragungseinheit miteinander verbundenen Datenverarbeitungseinheiten ein der jeweiligen Datenverarbeitungseinheit zugrundeliegender Satz von Daten und/oder Programmen in einer zentralen Datenverarbeitungseinheit redundant hinterlegt wird, wobei bei einem Ausfall und/oder einer Änderung einer der Datenverarbeitungseinheiten diese anhand des redundanten Satzes von Daten und/oder Programmen automatisch aktualisiert bzw. geändert wird, indem der betreffende Satz von Daten und/oder Programmen automatisch von der zentralen Datenverarbeitungseinheit zur betreffenden Datenverarbeitungseinheit übertragen wird oder umgekehrt.

Die Erfindung geht dabei von der Überlegung aus, dass für einen besonders einfachen und sicheren Austausch und/oder für eine Änderung einer Datenverarbeitungseinheit oder einer Automatisierungskomponente eine aufwendige Vorhaltung einer Vielzahl von Softwareprogrammen und Daten für die unterschiedlichen Arten von Automatisierungskomponenten vermieden sein sollte. Insbesondere im Falle eines Austausches einer Automatisierungskomponente kann es bedingt durch Überalterung der vorhandenen Softwareprogramme oder Daten zu Inkompatibilitäten und Inkonsistenzen kommen, welche es ebenfalls zu vermeiden gilt. Daher sollten die die jeweilige Automatisierungskomponente repräsentierenden Programme und/oder Daten derart hinterlegt werden, dass diese fortlaufend aktualisiert und verändert werden können. Dies ist besonders einfach dadurch ermöglicht, dass ein der jeweiligen Automatisierungskomponente oder Datenverarbeitungseinheit zugrundeliegender Satz von Daten und/oder Programmen redundant in Form eines weiteren identischen Satzes von Daten und/oder Programmen mittels einer zentralen Datenverarbeitungseinheit oder einer vorgegebenen Datenverarbeitungseinheit hinterlegt wird.

Als Automatisierungskomponente oder Datenverarbeitungseinheit eines Automatisierungssystems werden im folgenden Geräte und Installationen bezeichnet, die zur Steuerung und/oder Überwachung eines technischen Prozesses, z. B. eines Fertigungsprozesses, eingesetzt werden und an sich bekannt sind. Zu den Geräten gehören z. B. speicherprogrammierbare Steuerungen, dezentrale Peripheriegeräte, Bedien- und Beobachtungssysteme oder dergleichen, welche zu einem gemeinsamen Automatisierungsnetz über eine Datenübertragungseinheit, z. B. ein LAN (LAN = local area network), miteinander verbunden sind. Solche Geräte oder Netze werden zusammenfassend als Automatisierungskomponenten bezeichnet. Zu den Installationen gehören auch Sensoren oder Aktoren zur Interaktion mit dem technischen Prozess und die zwischen den Automatisierungskomponenten und einzelnen Sensoren und Aktoren erforderliche Verdrahtung. Je nach Art und Aufbau des Automatisierungssystems kann dieses hierarchisch in mehreren Ebenen, z. B. Prozess-, Automatisierungs- und zentrale Leitebene, ausgeführt sein. Dabei sind Komponenten der jeweiligen Ebene über eine zugehörige Datenübertragungseinheit miteinander verbunden. Beispielsweise sind Automatisierungskomponenten der Prozessebene und/oder der Automatisierungsebene mittels eines so genannten Feldbussystems horizontal miteinander verbunden und vertikal zur nächst höheren oder niederen Ebene, z. B. zur zentralen Leitoder Steuerebene, mittels eines Ethernetbussystems miteinander verbunden. Alternativ kann unter einem Automatisierungssystem mit mehreren Datenverarbeitungseinheiten auch ein komplexes mehrere Personalcomputer umfassendes Computernetz einer Firma, eines Büros verstanden werden.

Vorteilhafterweise wird der redundante Satz von Daten und/oder Programmen in der Art eines Archivs hinterlegt. Beispielsweise umfasst das Archiv in der Art eines Backup-Speichers sämtliche Daten und Programme aller an der Datenübertragungseinheit angebundenen Datenverarbeitungseinheiten oder Netzteilnehmer. Durch eine derartige zentrale Ablage der Daten oder Programme müssen diese bei einer Änderung, bei einem Austausch oder bei einer Hinzufügung nur einmal im zentralen Archiv geändert, aktualisiert bzw. hinzugefügt werden. Dabei ist der im zentralen Archiv hinterlegte redundante Satz von Daten und/oder Programmen in der Art eines Abbilds hinterlegt, so dass aus Sicht eines Benutzers dieser mittels der zentralen Datenverarbeitungseinheit simultan mit der betreffenden dezentralen Datenverarbeitungseinheit oder Automatisierungskomponente, z. B. einem Steuerungssystem für einen Antrieb, einen Roboter oder einem Leitsystem, kommuniziert. Der Abgleich der Daten und/oder Programme zwischen den Datenverarbeitungseinheiten oder Automatisierungskomponenten und der zentralen Datenverarbeitungseinheit (= zentrales Archiv) oder umgekehrt wird dabei bevorzugt automatisch ausgeführt.

In einer bevorzugten Ausführungsform wird der redundante Satz von Daten und/oder Programmen anhand von Projektierungsdaten automatisch erzeugt, aktualisiert und/oder hinterlegt. Dabei wird der redundante Satz mittels der Engineering- oder Projektierungsdaten im so genannten top-down-Verfahren automatisch generiert. Das heißt, nach dem Erstellen, Testen und Inbetriebnehmen der Gesamtanlage, werden alle Daten und/oder Programme auf die beteiligten Datenverarbeitungseinheiten und ein redundanter Satz und/oder die Engineering-Werkzeuge selbst auf eine Datenverarbeitungseinheit abgelegt. Alternativ oder zusätzlich kann der redundante Satz von Daten und/oder Programmen anhand von den vernetzten Datenverarbeitungseinheiten und der jeweiligen Datenverarbeitungseinheit selbst zugrundeliegenden Informationen automatisch erzeugt, aktualisiert und/oder hinterlegt wird. Dies geschieht im so genannten bottom-up-Verfahren, indem aus allen auf die Datenverarbeitungseinheiten verteilten Daten und/oder Programmen die redundante Ablage automatisch gebildet wird. Beispielsweise wird bei einem Verbindungsaufbau zwischen der jeweiligen Datenverarbeitungseinheit oder Automatisierungskomponente mit der zentralen Datenverarbeitungseinheit, insbesondere mit dem zentralen Archiv, über die Datenübertragungseinheit der lokale Satz von Daten und/oder Programmen in das zentrale Archiv automatisch übertragen, aktualisiert bzw. geändert oder umgekehrt.

Die zweitgenannte Aufgabe wird erfindungsgemäß gelöst durch ein Automatisierungssystem für eine technische Anlage mit einer Anzahl von über eine Datenübertragungseinheit miteinander verbundenen Datenverarbeitungseinheiten, wobei in einer zentralen Datenverarbeitungseinheit eine zentrale Speichereinheit zur redundanten Speicherung eines der jeweiligen Datenverarbeitungseinheit zugrundeliegenden Satzes von Daten und/oder Programmen vorgesehen ist, wobei mittels der zentralen Datenverarbeitungseinheit bei einem Ausfall und/oder einer Änderung einer der Datenverarbeitungseinheiten diese anhand des redundanten Satzes von Daten und/oder Programmen automatisch aktualisiert bzw. geändert wird, indem der betreffende redundante Satz von Daten und/oder Programmen automatisch mittels der zentralen Datenverarbeitungseinheit von der zentralen Speichereinheit zur betreffenden Datenverarbeitungseinheit übertragen wird und/oder umgekehrt.

Die mit der Erfindung erzielten Vorteile bestehen insbesondere darin, dass durch eine alle Daten und/oder Programme aller Komponenten berücksichtigende Archivierung mittels einer zentralen Speichereinheit in einer zentralen Datenverarbeitungseinheit, auf welche alle über eine Datenübertragungseinheit miteinander verbundenen Datenverarbeitungseinheiten zugreifen können, ein automatisches Laden von aktuellen, geänderten und/oder neu hinzugefügten Programmen und/oder Daten für eine einzelne oder mehrere Datenverarbeitungseinheiten oder Automatisierungskomponenten ermöglicht ist. Insbesondere ist eine allen Automatisierungskomponenten gemeinsame allgemeine strukturierte Eingabe und Ausgabe von Daten und/oder Programmen über eine einzelne Schnittstelle - zentrale Datenverarbeitungseinheit - ermöglicht, wodurch die Vorhaltung einer Vielzahl von verschiedenartigen Werkzeugen und Geräten, insbesondere Programmiergeräten, sicher vermieden ist. Je nach Art und Aufbau des zentralen Archivs ist ein automatisches Generieren der Programme und/oder Daten auf einer neu in das Automatisierungssystem einzubindende Automatisierungskomponente durch einfache Datenübertragung ermöglicht. Ein derartiges automatisches Laden und Aktualisieren von Anlagenkomponenten mittels eines zentralen Daten- und Programmarchivs führt zu besonders kurzen Servicezeiten bei gleichzeitig vereinfachter Bedienung durch einen Bediener.

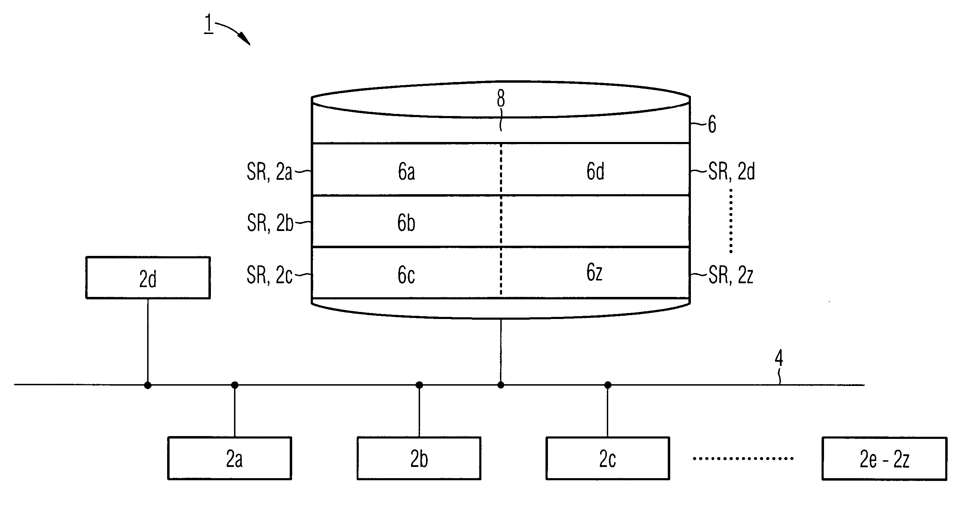

Ein Ausführungsbeispiel der Erfindung wird anhand einer Zeichnung näher erläutert. Darin zeigt die Figur ein Automatisierungssystem 1 zur Steuerung und/oder Regelung einer nicht näher dargestellten technischen Anlage, z. B. einer Kraftwerksanlage oder einer Chemieanlage. Das Automatisierungssystem 1 umfasst eine Mehrzahl von Datenverarbeitungseinheiten 2. Unter Datenverarbeitungseinheiten 2 werden Automatisierungskomponenten, insbesondere Geräte und Installationen bezeichnet, die zur Steuerung und/oder Überwachung eines technischen Prozesses, z. B. eines Fertigungsprozesses, eingesetzt werden und an sich bekannt sind. Die Datenverarbeitungseinheiten 2 umfassen beispielsweise eine speicherprogrammierbare Steuerung 2a (auch Automatisierungsgeräte genannt), dezentrale Peripheriegeräte 2b, z. B. Armaturen oder Ventile, ein Bedien- und Beobachtungssystem 2c oder ein Programmiergerät 2d, welche über eine Datenübertragungseinheit 4, z. B. ein LAN (LAN = local area network) zu einem gemeinsamen Automatisierungsnetz miteinander verbunden sind.

Zur Steuerung und/oder Regelung der technischen Anlage sind in den Datenverarbeitungseinheiten 2, 2a bis 2d Steuerungsund/oder Regelungsfunktionen in Form von Softwareprogrammen implementiert. Je nach Art, Funktion und Typ der jeweiligen Datenverarbeitungseinheit 2, 2a bis 2d weisen diese verschiedenartige Softwareprogramme und auch verschiedene Datenformate auf. Mit anderen Worten: Jede Datenverarbeitungseinheit 2, 2a bis 2d ist durch einen zugehörigen Satz S von Daten und/oder Programme repräsentiert.

Um im Fehlerfall oder auch bei einer Anlagenrevision den Austausch von einzelnen Datenverarbeitungseinheiten 2, 2a bis 2d in besonders einfacher Art und Weise zu ermöglichen, umfasst das Automatisierungssystem 1 in einer zentralen Datenverarbeitungseinheit 6 eine zentrale Speichereinheit 8. Die zentrale Datenverarbeitungseinheit 6 ist beispielsweise ein Server oder ein Personal Computer. Mittels der zentralen Speichereinheit 8 wird der jeweilige Satz S von Daten und/oder Programmen als redundanter Satz SR von Daten und/oder Programmen hinterlegt. Je nach Komplexität der technischen Anlage und somit auch des Automatisierungssystems 1 und daraus resultierend je nach Umfang und Anzahl der Daten und/oder Programmen kann der redundante Satz SR von Daten und/oder Programmen auch auf mehreren Servern oder Personalcomputern hinterlegt werden.

In Abhängigkeit von der gewählten Serverart wird der redundante Satz SR von Daten und/oder Programmen entsprechend strukturiert und hinterlegt. Beispielsweise wird jeder lokalen Datenverarbeitungseinheit 2, 2a bis 2z ein Speicherfach 6a bis 6z zugeordnet. In dem jeweiligen Speicherfach 6a bis 6z werden alle betriebsrelevanten Informationen, insbesondere so genannte Engineering- und/oder Betriebsdaten, beispielsweise in Form von HTML-Seiten (HTML = Hypertext Markup Language) hinterlegt, welche zur inhaltlichen Darstellung des Abbilds des redundanten Satzes SR von Daten und/oder Programmen in standardisierter Form in XML (Extensible Markup Language) oder XMS (Extended Memory Specification) geschrieben werden. Unter Engineeringdaten wird dabei der redundante Satz SR von Programmen und Parameterdaten, insbesondere von Ablaufprogrammen bzw. deren Parameter, für die Steuerung und/oder Regelung der technischen Anlage verstanden. Unter Betriebsdaten wird insbesondere der redundante Satz von Messdaten und Steuersignale für die Steuerung und/oder Regelung der technischen Anlage verstanden.

Bei einem Ausfall und/oder einer Änderung einer der Datenverarbeitungseinheiten 2, 2a bis 2d wird diese mittels der zentralen Datenverarbeitungseinheit 6 anhand des zugehörigen redundanten Satzes SR von Daten und/oder Programmen automatisch aktualisiert bzw. geändert wird, indem der betreffende redundante Satz SR von Daten und/oder Programmen automatisch von der zentralen Speichereinheit 8 zur betreffenden Datenverarbeitungseinheit 2, 2a bis 2d übertragen wird oder umgekehrt, wie durch den Pfeil P1 dargestellt.

Dabei wird in einem ersten Schritt beispielsweise von der betreffenden lokalen Datenverarbeitungseinheit 2a eine Meldeinformation an die zentrale Datenverarbeitungseinheit 6 gesendet, z. B. in Form von gerätebezogenen Engineeringinformationen wie Adresse, Topologie, Identität. Anhand der Identifizierung der betreffenden Datenverarbeitungseinheit 2a durch Vergleich mit hinterlegten Meldeinformationen wird mittels der zentralen Datenverarbeitungseinheit 6 der die Datenverarbeitungseinheit 2a zugehörige redundante Satz SR von Daten und/oder Programmen an die Datenverarbeitungseinheit 2a zu deren Aktualisierung, Aktivierung und/oder Änderung übertragen.

Im Betrieb des Automatisierungssystems 1 werden darüber hinaus Änderungen von Daten, wie z. B. Änderungen von Messwerten und Betriebszuständen, von der betreffenden lokalen Datenverarbeitungseinheit 2, 2a bis 2d an die zentrale Datenverarbeitungseinheit 6 zur Aktualisierung der zentralen Speichereinheit 8, insbesondere zur Aktualisierung des betreffenden redundanten Satzes SR von Daten übertragen. Das heißt, prozessrelevanten Änderungen von Daten werden ereignisgesteuert im jeweiligen Speicherfach 6a bis 6z der zentralen Speichereinheit 8 dadurch ausgeführt, dass beispielsweise der betreffende Messwert oder der Betriebszustand übertragen und im zugeordneten Abbild, d. h. im redundanten Satz SR von Daten anhand des aktuellen Wertes überschrieben wird; in der Figur beispielsweise durch den Pfeil P2 angedeutet.

Alternativ oder zusätzlich kann im Falle der Löschung einer vorhandenen Datenverarbeitungseinheit 2, 2a bis 2d oder im Falle des Hinzufügens einer neuen Datenverarbeitungseinheit 2e bis 2z der redundante Satz SR von Daten und/oder Programmen manuell oder automatisch mittels des Programmiergeräts 2d bzw. mittels der neu hinzugefügten Datenverarbeitungseinheit 2e bis 2z an die zentrale Datenverarbeitungseinheit 6 übertragen werden; in der Figur beispielhaft durch den Pfeil P3 bzw. P4 dargestellt.

Das hier beschriebene Konzept der redundanten Daten- und/oder Programmarchivierung und daraus resultierend der automatischen Aktualisierung und/oder Änderungen von Daten oder Programmen auf einzelnen Datenverarbeitungseinheiten 2, 2a bis 2z ist nicht auf ein industrielles Automatisierungssystem begrenzt. Dieses Prinzip kann auch im Bürobereich, Logistikbereich oder in Behörden, welche vernetzte Computersystemen mit einer Vielzahl von Daten und Programmen einsetzen, Anwendung finden.

## Patentansprüche

1. Verfahren zum Betrieb eines Automatisierungssystems (1) für eine technische Anlage mit einer Anzahl von über eine Datenübertragungseinheit (4) miteinander verbundenen Datenverarbeitungseinheiten (2, 2a bis 2z), wobei ein der jeweiligen Datenverarbeitungseinheit (2, 2a bis 2z) zugrundeliegender Satz (S) von Daten und/oder Programmen in einer zentralen Datenverarbeitungseinheit (6) redundant mittels eines redundanten Satzes (SR) von Daten und/oder Programmen hinterlegt wird, wobei bei einem Ausfall und/oder einer Änderung einer der Datenverarbeitungseinheiten (2, 2a bis 2z) diese anhand des redundanten Satzes (SR) von Daten und/oder Programmen automatisch aktualisiert bzw. geändert wird, indem der betreffende redundante Satz (SR) von Daten und/oder Programmen automatisch von der zentralen Datenverarbeitungseinheit (6) zur betreffenden Datenverarbeitungseinheit (2, 2a bis 2z) übertragen wird oder umgekehrt.

2. Verfahren nach Anspruch 1, bei dem der redundante Satz (SR) von Daten und/oder Programmen in der Art eines Archivs hinterlegt wird.

3. Verfahren nach Anspruch 1 oder 2, bei dem der redundante Satz (SR) von Daten und/oder Programmen anhand von Projektierungsdaten automatisch erzeugt, aktualisiert und/oder hinterlegt wird.

4. Verfahren nach einem der Ansprüche 1 bis 3, bei dem der redundante Satz (SR) von Daten und/oder Programmen anhand von den vernetzten Datenverarbeitungseinheiten (2, 2a bis 2z) und der jeweiligen Datenverarbeitungseinheit (2, 2a bis 2z) selbst zugrundeliegenden Informationen automatisch erzeugt, aktualisiert und/oder hinterlegt wird.

5. Automatisierungssystem (1) für eine technische Anlage mit einer Anzahl von über eine Datenübertragungseinheit (4) miteinander verbundenen Datenverarbeitungseinheiten (2, 2a bis 2z), wobei in einer zentralen Datenverarbeitungseinheit (6) eine zentrale Speichereinheit (8) zur redundanten Speicherung eines der jeweiligen Datenverarbeitungseinheit (2, 2a bis 2z) zugrundeliegenden redundanten Satzes (SR) von Daten und/oder Programmen vorgesehen ist, wobei mittels der zentralen Datenverarbeitungseinheit (6) bei einem Ausfall und/oder einer Änderung einer der Datenverarbeitungseinheiten (2, 2a bis 2z) diese anhand des redundanten Satzes (SR) von Daten und/oder Programmen automatisch aktualisiert bzw. geändert wird, indem der betreffende redundante Satz (SR) von Daten und/oder Programmen automatisch mittels der zentralen Datenverarbeitungseinheit (6) von der zentralen Speichereinheit (8) zur betreffenden Datenverarbeitungseinheit (2, 2a bis 2z) übertragen wird oder umgekehrt.
